# EUROPEAN PATENT APPLICATION

(11) **EP 2 015 036 A1**
(43) Date of publication of application: **14.01.2009**
(21) Application number: 07112103.2
(22) Date of filing: 09.07.2007
(51) Int. Cl.: G01G 19/58, G01G 19/44

(54) **Portable weighing apparatus**

(71) Applicant: Nyhan, Declan, Dunboyne, Co. Meath (IE)
(72) Inventor: Nyhan, Declan, Dunboyne, Co. Meath (IE)
(74) Representative: Howson, Richard G.B.

(57) **Abstract**

Portable weighing apparatus (10), having first (20) and second (30) load-receiving portions. Each load-receiving portion (20,30) includes load cell assemblies (70), and each load-receiving portion (20,30) is connected to a display unit (40). In operation, an object to be weighed is placed on one or both of the load-receiving portions (20,30). Signals generated by the load cells (70) are communicated to the display unit (40) such that the weight of the object is displayed thereon. The communication may be wireless.

## Description

### TECHNICAL FIELD

This invention relates to portable weighing apparatus for weighing a load that is to be carried by a human.

### BACKGROUND

The health and safety of workers in the workplace is taken increasingly seriously. Many companies have guidelines relating to the carrying of loads by workers. These guidelines may, for example, specify the maximum mass of a object in kilograms (kg) or pounds (lbs) that a worker may carry. (In such circumstances, the mass of a load is referred to less-accurately, but more usually, as its "weight". The term "weight" will therefore be used herein to refer to both the mass of objects and the force they exert when carried due to the effect of the Earth's gravity.) Certain legal jurisdictions similarly have statutory limits on the carrying of loads by workers in the workplace. It can be difficult, however, for a worker to know whether or not their lifting a particular object would amount to a breach of any relevant guidelines or law.

Many airlines have strict limits on the weight of luggage that passengers may check-in to the hold of aircraft and/or carry on board aircraft as hand luggage. Certain airlines impose cost penalties on those passengers who exceed these limits. The cost penalties can be severe. In an attempt not to exceed these limits, and hence to avoid these penalties, many passengers attempt to weigh their luggage at home before departing for the airport. The only available weighing scales that many passengers have at home are small bathroom scales that are ill-adapted to the weighing of items such as suitcases and travel-bags.

A similar problem exists when preparing to embark on a return flight. In addition, passengers may be returning with additional luggage in the form of souvenirs or other shopping that may make their exceeding the relevant airline's luggage weight limits more likely.

It is an object of this invention to address these problems.

### SUMMARY OF THE INVENTION

According to a first aspect of this invention, there is provided portable weighing apparatus for weighing a load that is to be carried by a human, the apparatus comprising first and second load-receiving portions, each load-receiving portion arranged to receive part of a load to be weighed and including respective weighing means arranged to sense the weight of the load thereon, the load-receiving portions arranged to communicate to display means signals indicative of the weight sensed by the weighing means, such that the display means can display the weight of the load, wherein each load-receiving portion is separate or separable from the other.

By providing first and second load-receiving portions that are separate or separable, the portions can be spaced apart in use such that the load to be weighed can be securely supported therebetween, even if the load is quite large. The avoids the problem of balancing a load, especially large loads such as suitcases, on small, unitary, weighing scales. When not in use, the load-receiving portion can be placed adjacent one another to save space. In this way, the apparatus may be packed into a user's luggage and taken with them for use when preparing for a return journey. Thus, the apparatus is convenient to use when travelling and may therefore be considered "travel friendly".

The load-receiving portions may be arranged such that they can be fitted together for storage or transportation, and such that they are separable for use. The load-receiving portions may be arranged such that they cannot be fitted together and may be separate but not, thus, separable.

The portable weighing apparatus may include the display means, wherein the display means is arranged to display the weight of the load in response to receiving the signals.

The display means may be separate from the first and second load-receiving portions. The display means may form part of one of the first and second load-receiving portions. The display means may be connectable to one or both of the first and second load-receiving portions by at least one electrical cable. The at least one electrical cable may extend from the display means to both of the first and second load-receiving portions. The at least one electrical cable may extend from the display means to one of the first and second load-receiving portions, and from that to the other load-receiving portion. The weighing means may communicate the signals to the display means via the at least one electrical cable. The at least one cable may be releasably connectable to the display means and/or one or both of the first and second load-receiving portions. The at least one cable may be releasably connectable by one or more end thereof having one of a plug and socket and the portion of the apparatus to which the cable is to connect having the other of a plug and socket. One end of the at least one cable may have a plug, the other end may have a socket. Each end may have a plug or a socket.

The display means may include a digital display arranged to display digits indicative of the weight of the load. The display means may include a liquid crystal display (LCD). The display means may include an analogue display arranged to indicate on a scale a figure indicative of the weight of the load. The display means may be further arranged function as a clock and to display the time. The display means may further be arranged to function as an alarm clock.

The display means may include an electrical power supply. The power supply may comprise a battery; it may comprise means operable to generate electrical power from incident light. The display means may be connectable to one or both of the first and second load-receiving portions so as to supply electrical power thereto from the power supply for the operation thereof.

The display means may form part of a portable electronic device. In this way, components of the portable weighing apparatus are minimised, such that the apparatus occupies less space and is cheaper to produce than would be the case if the apparatus included its own, dedicated, display apparatus. The portable electronic device may be, for example, a mobile telephone (sometimes referred to as a "cell phone"), a laptop computer, a palmtop computer, a personal digital assistant (PDA) or a portable music player such as an MP3 player. The portable weighing apparatus may be arranged to communicate wirelessly with the portable electronic device such that the signals can be communicated to the display means thereby. One or both of the load-receiving portions may include wireless communication means arranged to communicate with the portable electronic device in this way. The portable electronic device may also include wireless communication means. The or each wireless communication means may be arranged to communicate using a protocol such as, for example, Bluetooth (RTM) or a protocol conforming to one of the IEEE 803.11x standards. The or each wireless communication means may be arranged to communicate by way of a light signal, such as an infra red light signal. An IrDA protocol may be used. The or each wireless communication means may be arranged to communicate by way of SMS text messages. Accordingly, each of the portable weighing apparatus and the portable electronic device and be arranged to receive and/or transmit SMS text messages.

One or both of the load-receiving portions may have first and second weighing means, spaced apart from one another. This is to make the respective, or each, load-receiving portion with the first and second weighing means more stable when the load is placed thereon. Each weighing means may comprise one or more load cells operable to provide an electrical signal indicative of a force exerted thereon.

One or both of the load-receiving portions may include an elongate load-receiving surface. One or both of the load-receiving portions may be elongate. The two load-receiving portions may have no connection to one another. The two load-receiving portions may have not connection to one another other than that for communicating the signals to the display means.

The apparatus may include a thermometer. The thermometer may be arranged to sense the ambient temperature. The apparatus may be arranged to display the temperature sensed be the thermometer on the display means.

The apparatus may be arranged such that a load can be weighed, and that weight displayed on the display means, by placing the load on just one of the load-receiving portions. For example, a small item of hand luggage may be weighed by placing it on just one of the load-receiving portion.

### BRIEF DESCRIPTION OF THE DRAWINGS

Specific embodiments of the present invention are described below by way of example only and with reference to the accompanying drawings, in which:
Figure 1 is a perspective view of portable weighing apparatus, having two load-receiving portions and display means;
Figure 2 is a side elevation of one of the load-receiving portions;
Figure 3 is a side elevation of the load-receiving portion shown in Figure 2, with part thereof removed to shown normally-hidden detail, some of which is shown in exploded form; and
Figure 4 is an underneath view of the load-receiving portion shown in Figure 2, with part thereof removed to show normally-hidden detail.

### SPECIFIC DESCRIPTION OF CERTAIN EXEMPLARY EMBODIMENTS

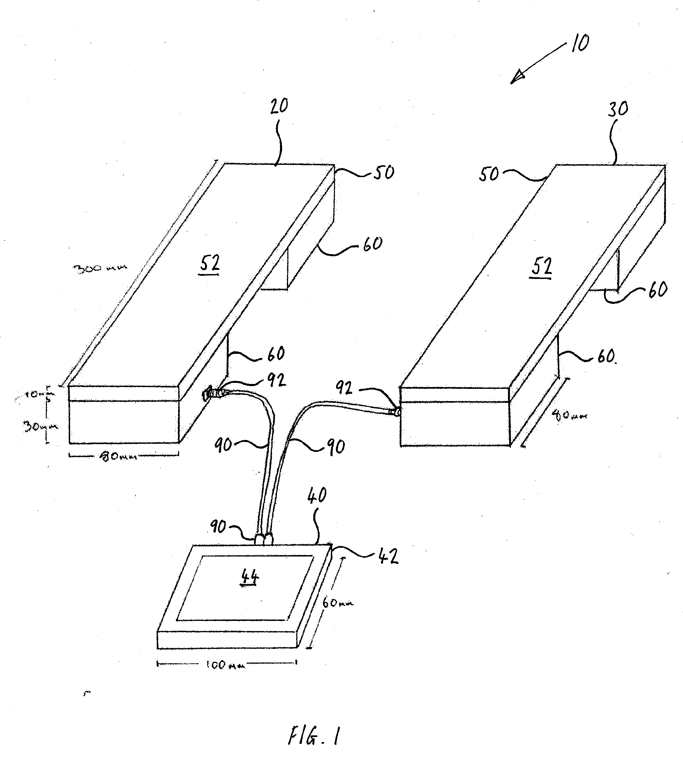

Figure 1 shows portable weighing apparatus 10 having a first load-receiving portion 20, a second load-receiving portion 30 and display means in the form of a display unit 40.

Each of the load-receiving portions 20, 30 is generally the same as the other. For simplicity only one of the load-receiving portions 20, 30 will therefore be described in detail; it being understood that, at least in this embodiment, the other portion 20, 30 is intended to be the same. The exemplary one of the portions 20, 30 includes a load-receiving surface 52 provided by a rigid plastic plate 50 that is 10mm, 80mm wide and 300mm long. At each end of the plastic plate 50, on the opposite surface to the load-receiving surface 52, weighing means in the form of a respective load cell assembly is provided. This opposite surface will be referred to as the "undersurface". The load cell assemblies are not visible in Figure 1 as each is surrounded by a respective housing 60, which is shown in Figure 1. Each housing 60 is a generally box-like plastic cover that extends from the undersurface of the plastic plate 50, flush with the short edge thereof and an adjacent part of each of the long edges. The housings 60 are releasably attachable to the undersurface of the plate 50 by being snap-fitted thereto.

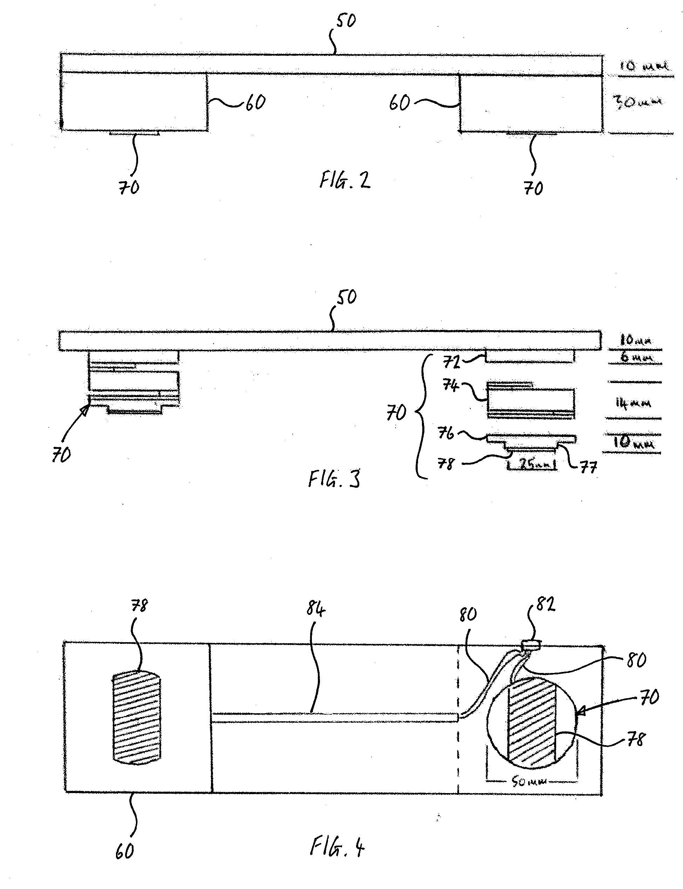

Figure 2 shows in side elevation the plastic plate 50, with the two housings 62 affixed to the undersurface thereof. As can be seen in Figure 2, a portion of each of the two load cell assemblies 70 that is remote from the plastic plate 50 projects very slightly beyond the respective housing 60 around the load cell assembly 70.

Figure 3 shows the exemplary one of the load-receiving portions 20, 30 with the two housings 60 removed to shown the two load cell assemblies 70. Each load cell assembly is generally the same as the other. With continued reference to Figure 3, only one 70 of the assemblies 70 will therefore be explained in detail, it being understood that, at least in this embodiment, the other assembly 70 is intended to be the same. The exemplary load cell assembly 70 is made up of three components: a mounting boss 72, a load cell 74 and a leg 76. The mounting boss 72 is generally cylindrical, with a thickness of 6mm and a diameter of 50mm; and, although it could be separate from the plastic plate 50 in other embodiments, in this embodiment it is integrally moulded with the plastic plate 50. The load cell 74 is a cylindrical aluminium load cell with a thickness of 14mm and generally the same diameter as the mounting boss 72. The leg 76 is formed of plastic. It is generally cylindrical, with generally the same diameter as the mounting boss 72 and the load cell 74. Although generally cylindrical, a floor-contacting portion 77 of the leg 76 projects from a cylindrical remainder thereof. The floor-contacting portion 77 has a cross-section having two long sides that are geometric chords relative to the cylindrical part of the leg 76, and two short sides therebetween that are flush with the cylindrical part of the leg 76.

The load cell 74 is fixed to the mounting plate 72 by two screws (not shown) and the leg 76 is fixed to the load cell 74 with two further screws (not shown. Thus, the load cell 74 is sandwiched between the other two components 72, 76, with the mounting plate 72 adjacent the plate 50 and the leg 76 furthest therefrom.

A 1mm thick rubber pad 78 is provided on the floor-contacting portion 77 of the leg 76 to cover what would otherwise be the exposed face thereof. The rubber pad 78 is of a material that resists slipping.

Electrical output wires 80 from each load cell 74 of the exemplary load-receiving portion 20, 30 are routed to a socket 82 mounted in a wall of one of the housings 60. A length of the output wires that stretches between the two housings 60 is covered with a length of protective covering 84.

With reference to Figure 1, a respective cable 90 is provided between each load-receiving portion 20, 30 and the display unit 40. Each cable 90 has a plug at each end in the form of a jack 92. The jack 92 on one end of each cable 90 is plugged into the socket 82 of the respective load-receiving portion 20, 30. The jack 92 on the other end of each cable is plugged into a respective socket mounted in a housing 42 of the display unit 40.

With continued reference to Figure 1, the display unit 40 includes a LCD display screen 44 mounted in the housing 42 thereof so as to be visible to a user. Also mounted in the housing 42 are electronic components (not shown) that are arranged and operable to receive signals from the load cells 76 and to output to the display screen 44 signals that cause the display screen 44 to display information indicative of load on the load cells 76. The electronic components are arranged and operable such that a user can select whether to display this information in kilograms, stones or pounds. This allows the apparatus to be used in many different countries, in which people may be familiar with different units of mass. Further units of mass may be selected in other embodiments. The electronic components are also arranged and operable to act as a clock and as an alarm clock, and to display on the display screen 44 information necessary for these functions. The display unit 40 can be used as a travel alarm-clock when detached from the remainder of apparatus 10.

In operation, the two load-receiving portions 20, 30 are positioned with the plastic plates 50 uppermost and the rubber pads 78 on the floor-contacting portion 77 of each leg 76 resting on the floor. The load receiving portions 20, 30 are spaced apart from one another at a distance of approximately 600mm. This is generally as shown in Figure 1. The object to be weighed, such as a suitcase (not shown), is placed across the two load-receiving portions 20, 30 such that each portion 20, 30 supports a respective end of the suitcase in a stable manner. The weight of the suitcase acts on the plastic plate 50 of each load receiving portion 20, 30 and is accordingly transferred through each mounting boss 72 to the load cells 74 that are supported by the legs 76 and so compressed by the weight of the suitcase. The load cells 72 output signals along the wires 80 indicative of the compression to which they are subjected. The wires 80 convey the signals to the display unit 40 and to the electrical components thereof. In response to receipt of these signals from the load cells 72, the electrical components in the display unit 40 output to the display screen 44 signals that cause the screen to display numerals indicating the weight of the suitcase.

In an alternative embodiment that is not illustrated, the portable weighing apparatus described above with reference to Figures 1 to 4 is modified so as not to include the display unit 40. Instead, one or both of the load-receiving portions 20, 30 is modified to communicated wirelessly with a portable electronic device such as a mobile telephone or a PDA. The or each modified load-receiving portion wirelessly communicates with the portable electronic device in this way to communicate information to that device indicative of the weight of an object placed across the plastic plates 50 of the modified load-receiving portions.

It will be understood that other embodiments of the present invention are possible. Such embodiments may differ in the dimensions of certain components, or may even omit certain components and/or include additional components not described hereinabove.

For example, in another alternative embodiment that is not illustrated, each of the load-receiving portions 20, 30 is modified so as to be 100mm wide, rather than 80mm wide. The mounting plates 72 may be omitted and each load cell 74 may be attached directly to the underside of each plastic plate 50 without a mounting plate 72 therebetween. The two housings 60 are each reduced in length by the thickness of each mounting plate 72, that is by 6mm, to take account of the omission of the mounting plates 72.

## Claims

1. Portable weighing apparatus for weighing a load that is to be carried by a human, the apparatus comprising first and second load-receiving portions, each load-receiving portion arranged to receive part of a load to be weighed and including respective weighing means arranged to sense the weight of the load thereon, the load-receiving portions arranged to communicate to display means signals indicative of the weight sensed by the weighing means, such that the display means can display the weight of the load, wherein each load-receiving portion is separate or separable from the other.

2. Portable weighing apparatus according to claim 1, wherein the portable weighing apparatus includes the display means, and the display means is arranged to display the weight of the load in response to receiving the signals.

3. Portable weighing apparatus according to claim 1 or claim 2, wherein the display means is separate from the first and second load-receiving portions.

4. Portable weighing apparatus according to any preceding claim, wherein the weighing means communicates the signals to the display means via at least one electrical cable.

5. Portable weighing apparatus according to claim 4, wherein the at least one cable is releasably connectable to the display means and/or one or both of the first and second load-receiving portions.

6. Portable weighing apparatus according to 5, wherein the at least one cable is releasably connectable by one or more end thereof having one of a plug and socket and the portion of the apparatus to which the cable is to connect having the other of a plug and socket.

7. Portable weighing apparatus according to any preceding claim, wherein the display means includes a digital display arranged to display digits indicative of the weight of the load.

8. Portable weighing apparatus according to any preceding claim, wherein the display means includes a liquid crystal display (LCD).

9. Portable weighing apparatus according to any preceding claim, wherein the display means is further arranged to function as a clock and to display the time.

10. Portable weighing apparatus according to any preceding claim, wherein the display means is arranged to function as an alarm clock, such as a travel alarm-clock.

11. Portable weighing apparatus according to any preceding claim, wherein the display means includes an electrical power supply and is connectable to one or both of the first and second load-receiving portions so as to supply electrical power thereto for operation thereof.

12. Portable weighing apparatus according to any preceding claim, wherein the display means forms part of a portable electronic device.

13. Portable weighing apparatus according to claim 12, wherein the portable electronic is, for example, a mobile telephone (sometimes referred to as a "cell phone"), a laptop computer, a palmtop computer, a personal digital assistant (PDA) or a portable music player such as an MP3 player.

14. Portable weighing apparatus according to claim 12 or claim 13, wherein the portable weighing apparatus is arranged to communicate wirelessly with the portable electronic device such that the signals can be communicated to the display means thereby.

15. Portable weighing apparatus according to any one of claims 12 to 14, wherein one or both of the load-receiving portions includes wireless communication means arranged to communicate with the portable electronic device in this way.

16. Portable weighing apparatus according to any preceding claim, wherein one or both of the load-receiving portions has first and second weighing means, spaced apart from one another, each of the first and second weighing means arranged to support the remainder of the respective load-receiving portion above a surface on which the load-receiving portion is placed for operation.

17. Portable weighing apparatus according to any preceding claim, wherein one or both of the load-receiving portions includes an elongate load-receiving surface.

18. Portable weighing apparatus according to any preceding claims, wherein one or both of the load-receiving portions is elongate.

19. Portable weighing apparatus according to any preceding claim, wherein the two load-receiving portions have no connection to one another.

20. Portable weighing apparatus according to claim any one of claims 1 to 18, wherein the two load-receiving portions have not connection to one another other than that for communicating the signals to the display means.
